# EUROPEAN PATENT APPLICATION

(11) **EP 0 653 617 A2**
(43) Date of publication of application: **17.05.1995**
(21) Application number: 94250273.3
(22) Date of filing: 11.11.1994
(51) Int. Cl.: G01N 1/30

(54) **Fat-soluble substituting agent for substituting dehydrating agent for producing tissue preparation**

(30) Priority: 12.11.1993 JP 306015/93
(71) Applicant: Shino, Junko, Beppu, Oh'ita (JP); Shino, Yuko, Beppu, Oh'ita (JP)
(72) Inventor: Shino, Tsutomu, Beppu, Oh'ita (JP)
(74) Representative: UEXKÜLL & STOLBERG

(57) **Abstract**

A fat-soluble substituting agent for substituting a dehydrating agent for producing a tissue preparation, comprising at least one selected from the group consisting of esters of fatty acid and alcohol and having a total carbon number of 6 to 50, preferaby 6 to 30 and ethers of the same kind or a different kind of alcohols and having a total carbon number of 6 to 50, preferably 6 to 30. The tissue preparation is prepared by fixing a tissue piece, dehydration-substituting with a dehydrating agent, substituting for the dehydrating agent with the fat-soluble substituting agent, embedding with an embedding agent, followed by slicing and staining (dyeing). It is odorfree and harmless.

## Description

### FIELD OF THE INVENTION

The present invention relates to a novel fat-soluble substituting agent for substituting a dehydrating agent used for producing a tissue preparation, and a production process for the tissue preparation using the above novel fat-soluble substituting agent.

### BACKGROUND

A morphogenic observation of a tissue preparation under a microscope constitutes the bases for a diagnosis, a pathology and a morphology in medicine and biology.

In general, the tissue preparation is used in a region of an optical microscope. In recent years, a laser scanning microscope has been introduced, and an electron microscope preparation can be produced as well from an optical microscope preparation, which is expanding the applicable range thereof more than ever to strengthen a continuity to an electron microscope region in which small organs in a cell are primarily observed. Further, a technology in which DNA is from the tissue preparation is put to practical use, and the applicable range thereof has been expanded. Thus, usefulness of the tissue preparation has been increasing more and more. Now, a procedure for producing a general tissue preparation will be briefly explained.

In principle, as for the tissue preparation, first tissue pieces (gross specimens) are cut off from various living bodies (organisms) and dissected specimens. Then, the tissue piece is prepared by a step in which this tissue piece is subjected to a fixing treatment, a steps in which water contained in the tissue is subjected to a dehydration-substituting treatment with a dehydrating agent, a step in which the dehydrating agent present in the tissue originating in the preceding step is substituted (cleared) with a fat-soluble substituting agent, a step in which the tissue is embedded with an embedding medium, and further a step in which the embedded tissue is sliced and dyed.

In the above process for preparing the tissue preparation, alcohol series is most generally used as the dehydrating agent in the dehydrating step. After finishing this treatment, water contained in the tissue is substituted with alcohol.

Next, it is aimed to substitute an embedding medium for alcohol in this tissue. Since as represented by paraffin, the embedding agent generally used is fat-soluble, it is substituted (cleared) with a substituting agent having a solvent property with a higher fat-solubility than alcohol. Xylene, benzene, chloroform etc. are used for this fat-soluble substituting agent.

Finally, the tissue thus obtained is dipped in an embedding medium. The tissue is resultingly obtained in which all of water originally contained therein is finally substituted with the embedding agent.

In case of the most representative paraffin embedding, the tissue obtained after substituting with the fat-soluble substituting agent in the preceding step is dipped in molten paraffin at 60°C and then, cooled down to a room temperature for solidifying.

The embedded tissue piece (gross specimen) thus obtained is sliced (sectioned) to a thickness of about 2 to 4 µ m with a microtome and subjected to desired dyeing after de-paraffinizing, to thereby complete the tissue preparation.

The conventional techniques for preparing tissue preparations (microscopic slides) are disclosed, e.g., in "Dermal Pathology" editted by James H. Graham et al, published by Harper & Row, Publishers, Inc. 1972, pp.47-67, at Section 3. Techniques for preparation of skin for histopathologic study by Lee G.Luna, the disclosure of which may be referred to upon necessity for detais.

### SUMMARY OF THE DISCLOSURE

Based on the eager investigation the following problems have been found by the present inventor. As described above, xylene, benzene, chloroform etc. have so far been used as a fat-soluble substituting agent for substituting (clearing) a dehydrating agent. However, it is well known that they have a volatility and a toxicity (irritation to skin and respiratory tract mucosa, central nervous disorder and anemia).

Since the odor thereof is peculiar and is an environmental contaminant which is volatalized into air, a special ventilating device is needed in the use thereof. Further, a waste solution obtained after use has to be treated as an industrial waste and needs care in handling. Accordingly, concern on health trouble of a tissue preparation producer who handles them is caused.

Accordingly, an object of the present invention is to provide a novel fat-soluble substituting agent for substituting a dehydrating agent for producing a tissue preparation, which is non-volatile, odorless and atoxic and which has an excellent safety. Further, an object of the present invention is to provide a tissue preparation production process in which the fat-soluble substituting agent described above is used and which is safe to an operator.

Intensive researches made in order to develop a safe and public pollution-free fat-soluble substituting agent for producing a tissue preparation have resulted in finding a novel substituting agent which can achieve the above objects to complete the present invention.

That is, the present invention relates to a fat-soluble substituting agent for substituting a dehydrating agent for producing a tissue preparation, comprising at least one selected from the group consisting of esters of fatty acid and alcohol and having a total carbon number of 6 to 50, preferably 6 to 30 and ethers of the same kind or a different kind of alcohol and having a total carbon number of 6 to 50, preferably 6 to 30, and a process for preparing a tissue preparation characterized by using the fat-soluble substituting agent described above.

Any of esters of fatty acid and alcohol and having a total carbon number of 6 to 50, preferably 6 to 30 and ethers of the same kind or a different kind of alcohols and having a total carbon number of 6 to 50, preferably 6 to 30, which are applied to the present invention, is odorless and non-volatile, and further atoxic. Accordingly, an operator can safely produce a tissue preparation without a concern for damaging health.

In addition, since the above fat-soluble substituting agent of the present invention is miscible well with a dehydrating agent, particularly alcohols, it is rapidly substituted (cleared) for the dehydrating agent present in the tissue. In addition thereto, since it is fat-soluble, following dipping of the tissue in an embedding medium, particularly paraffins allow the embedding medium represented by paraffins to rapidly and surely penetrate into the whole tissue.

Further, the tissue preparation thus prepared is so good that the tissue is not damaged and staining (dyeing) for making it easy to observe with a microscope is not prevented.

The meritorious effects of the present invention are summarized as follows.

Any of the fat-soluble substituting agents for substituting the dehydrating agent applied to the process for preparation a tissue of the present invention is odorless and non-volatile, and further, atoxic. Accordingly, a worker can safely produce a tissue preparation without a risk to damage health. Further, a special ventilating device such as a draft is not needed in using, and handling is so excellent that a waste solution after using does not need any special treatment.

Further, with respect to fatty acid ester, saponification of a waste solution obtained after using by an alkaline treatment according to necessity to make a soap makes it possible to reuse it for washing apparatuses as a cleaner. It is preferred as well from a viewpoint of an environmental problem and saving of resources.

In addition, since the substituting agent of the present invention is well miscible with a dehydrating agent, particularly alcohols, it is substituted (cleared) for the dehydrating agent present in the tissue. In addition thereto, since it is fat-soluble, it is rapidly substituted with an embedding agent, particularly paraffins in a later embedding process, and it can be sufficiently solidified. Accordingly, it is easily sliced to a thickness suitable for a microscopic tissue preparation.

Further, the tissue preparations thus prepared are so good that the tissue and cell structure are maintained in an excellent state without damage, and dyeing for facilitating a microscopic observation is not prevented.

The process for preparing the tissue preparation of the present invention is an excellent process which improves the working environment in such the process and provides a beautiful microscopic image without preventing staining (dyeing) for facilitating a microscopic observation.

### BRIEF DESCRIPTION OF THE DRAWINGS

### Fig. 1

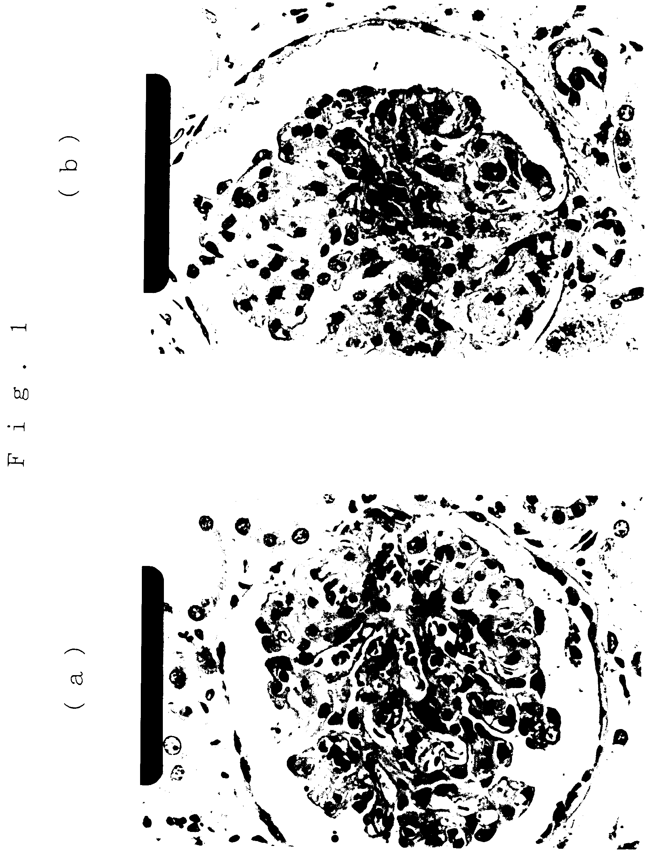

Either of (a) and (b) in Fig. 1 is a microscopic photo showing a tissue structure of a glomerulus of a human kidney, that is, a form of part of an organism;
(a) is a photo in which there is observed with a microscope, a tissue preparation representing a glomerulus of a human kidney, which was prepared by one embodiment of the process for preparing the tissue preparation of the present invention (Example 1) using isopropyl palmitate as a fat-soluble substituting agent for substituting a dehydrating agent (hematoxylin-eosin staining, × 600);
and (b) is a photo in which there is observed with a microscope, a tissue preparation representing a glomerulus of a kidney, which was prepared by a conventional process for preparing tissue preparation using xylene as a fat-soluble substituting agent (Comparative Example 1), (hematoxylin-eosin staining, × 600).

### Fig. 2

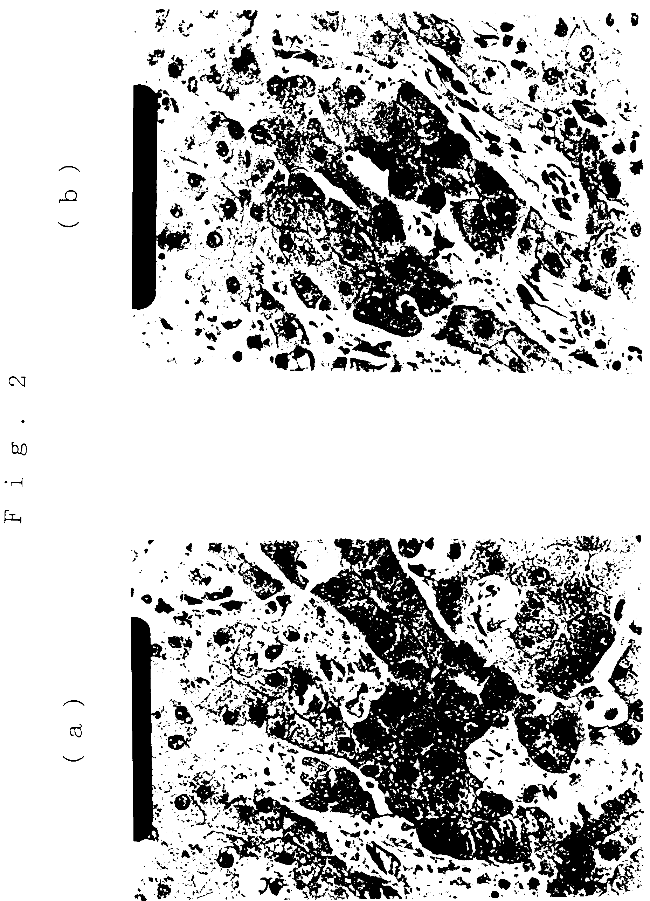

Fig. 2 is a microscopic photo showing a cell tissue of a human liver cancer, that is, a form of a part of an organism, and
(a) is a photo in which there is observed with the microscope, a tissue preparation produced by an another embodiment (Example 2) of the process for preparing the tissue preparation of the present invention using isopropyl palmitate as a fat-soluble substituting agent for substituting the dehydrating agent (hematoxylin-eosin staining, × 600);
and (b) is a photo in which there is observed with a microscope, a tissue preparation representing a glomerulus of a kidney, which was prepared by a conventional process for preparing tissue preparation using xylene as a fat-soluble substituting agent (Comparative Example 2), (hematoxylin-eosin staining, × 600).

### DESCRIPTION OF THE PREFERRED EMBODIMENTS

Those which become raw materials for esters or ethers which are the fat-soluble substituting agents of the present invention are alcohols and/or fatty acids, wherein alcohols are those which have at least one hydroxyl group and which are liquid and have a solvent property. Accordingly, they are preferably branched and further, have less hydroxyl groups which are not subjected to an ether reaction or an ester reaction from a viewpoint of maintaining non-volatility and fat-solubility. In particular, alcohols having 1 to 3 hydroxyl groups are preferred.

Fatty acid is those which are organic acids having carboxyl groups and which are liquid and have a solvent property. Further, all of the carboxyl groups are preferably subjected to an ester reaction in order to maintain a fat-solubility, and monovalent fatty acid is particularly preferred.

The fat-soluble substituting agent of the present invention is esters of fatty acid and alcohol or ethers of the same kind or a different kind of alcohols. This fat-soluble substituting agent of the present invention is required to be liquid and have a solvent property, and this results that the total carbon number is 6 to 50, preferably 6 to 30.

Since a carbon number less than 6 provides a volatility and gives as well odor, unpleasant feeling is given in handling and it is unsuitable from a viewpoint of safety. On the contrary, a carbon number larger than 50 provides those which are not liquid at a room temperature in many cases and therefore, it is unsuitable. It is different to some extent by kind of ether or ester but the total carbon number generally preferred in the present invention is 10 to 30, more preferred 10 to 26, more preferably 15 to 26, most preferably 15 to 20.

In particular, fatty acid ester is preferred. The action thereof is uncertain but it can provide a microscopic image which is particularly beautifully stained (dyed) as compared with a conventional product. Further, with respect to the fatty ester, saponification of a waste solution obtained after using by alkaline treatment according to necessity to make a soap makes it possible to reuse it for washing apparatuses as a cleaner. It is preferred as well from a viewpoint of an environmental problem and saving of resources.

Esters of fatty acid and alcohol and having a total carbon number of 6 to 50 include those which are esters of fatty acid and monohydric alcohol or esters of fatty acid and polyhydric alcohol, having a total carbon number of 6 to 50.

There are included in fatty acid ester with monohydric alcohol, for example, esters having a total carbon number of 6 to 50 such as isostearil isostearate (carbon number C36) etc. are preferred, more preferably esters having a total carbon number of 6 to 30 such as isomyristil isomyristate (C28) etc. Most preferred are esters having a total carbon number of generally 10 to 26, particularly 15 to 26, i.e., esters such as isopropyl myristate (C17), isopropyl palmitate (C19), ethyl palmitate (C18), methyl stearate (C19), butyl stearate (C22), cetyl isooctanoate (C24), diisobutyl sebacate (C18) and the like. Among those most preferred are isopropyl myristate and/or isopropyl palmitate.

Examples of the fatty ester with di- or more valent polyhydric alcohol include esters having a total carbon number of 6 to 50 such as tetrahexyl pentaerithritol ester (C44), diglyceryl tetraoctanoate (C38) etc. More preferred are esters having a total carbon number of 10 to 30, e.g., esters such as propylene glycol dioctanoate (C19), propylene glycol monooctanoate (C11), glyceryl trioctanoate (C27), glyceryl monolaurate (C15), dioctyl dipropylene glycol ester (C22), diethylene glycol monooctanoate (C12), pentaethylene glycol monolaurate (C22) and the like.

Ethers of the same kind or a different kind of alcohols and having a total carbon number of 6 to 50 (or 6 to 30) are roughly classified into ethers of monohydric alcohols themselves or ethers of monohydric alcohol and polyhydric alcohols having a total carbon number of 6 to 50 (or 6 to 30).

Ethers of monohydric alcohols themselves have preferably a total carbon number of 10 to 50 such as distearyl ether (C36), more preferably 10 to 30, including dioctyl ether (C16), dilauryl ether (C24), dihexyl ether (C12) and the like. Also ethers having a total carbon number of 8 to 20 are preferred.

Ethers of monohydric alcohols and polyhydric alcohols are preferably with a total carbon number of 10 to 50 such as distearil glyceryl ether (C39), more preferably 10 to 30, including trioctyl glyceryl ether (C27), oleyl glyceryl ether (C21), propylene glycol monolauryl ether (C15), dipropylene glycol monolauryl ether (C18), diethylene glycol monolauryl ether (C16), diethylene glycol dioctyl ether (C20), and the like. Generally preferred are also ethers having a total carbon number of 6 to 22.

Of the substituting agents listed above, most preferred are isopropyl palmitate and isopropyl myristate. In the substituting agent of the present invention, esters or ethers described above may be used singly or in a mixture of two or more kinds for purpose of adjusting a molecular weight etc.

Mixing of a small amount of isopropyl alcohol in esters or ethers described above finally provides a preparation having excellent staining (dyeing) ability. It is a result contrary to what has so far been considered, i.e. the alcohol content in a tissue should be substituted with a substituting agent as completely as possible in the substituting process of the dehydrating agent, particularly when alcohols are used, and it is a point worthy of special mention.

While the detailed function thereof is unknown, it is considered to be attributable to that since decrease in the apparent molecular weight makes it easy for fatty acid ester or alcohol ether to penetrate into the tissue, substitution (penetration) with an embedding medium, which represents fat-solubility thereafter, rapidly and securely proceeds.

A preferred addition amount of isopropyl alcohol is preferably 1 to 20 volume %, more preferably 10 to 20 volume % based on esters or ethers or a mixture thereof according to the present invention. An amount less than 1 volume % does not sufficiently provide the effect given by addition of isopropyl alcohol. Addition beyond 20 volume % lacks in the fat-solubility, and since it becomes difficult to substitute an embedding medium for paraffins thereafter, it is unsuitable.

The process for preparing the tissue preparation according to the present invention may basically follow a conventional production process, except that the above substituting agent of the present invention is used for a substituting agent for the dehydrating agent. Herein, one example of the process for preparing the tissue preparation of the present invention will be generally described by respective processes, provided that such the process will not be limited thereto.

### 〈Sampling of tissue and fixing treatment process〉

First of all, an aimed tissue piece is cut off from living body (organism) or a dissected dead body (organism) and then, this is fixed. "Fixing" is a treatment for solidifying a tissue protein and preserving a form of an organ tissue in a form as close to a state in the living organism as possible.

Various tissue-fixing solution is selected according to components of the organism which is a research object. Usually used is formalin (a trade name or a popular name of Schering A. G., Ltd., Germany, that obtained by adding 13 % methanol to a 40 % formaldehyde aqueous solution). In addition thereto, there are enumerated aldehydes such as glutaraldehyde and hydroxyadipoaldehyde etc., chloral hydrate, and a tissue-fixing solution described in JP patent Kokai publication JP-A 49-126433. In the present invention, the kind of the tissue-fixing solution applied is not limited

### 〈Dehydrating treatment process〉

The object of the process concerned is a so-called pre-treatment process for ensuring penetration of an embedding medium into a tissue and is the first process for substituting a solvent having affinity to the embedding medium for water contained in the tissue having no affinity to the embedding medium.

Most generally, the dehydrating treatment is carried out with an alcohol series. In the alcohol series, a tissue piece is moved in order to alcohols having higher concentrations such as, for example, 30 %, 50 %, 70 to 80 %, and 100 %, and water contained in the tissue is substituted in order with alcohol having the higher concentration.

Ethanol, isopropanol and methanol etc. are used as alcohols. Since ethanol and isopropanol are safe, either of them is usually selected, while methanol vapor is toxic. The dehydrating agent in the present invention is not limited to these alcohols, and there can be applied as well, for example, 2,2-dimethoxypropane, methyl orthoformate, ethyl orthoformate, methyl orthoacetate, and ethyl orthoacetate etc., as described in, for example, JP patent Kokai publication JP-A 3-68865. However, most preferred is isopropyl alcohol in the case where the inventive fat-soluble substituting agent is used.

### 〈Process for substituting (clearing) fat-soluble substituting agent for dehydrating agent〉

The process concerned has an object to further substitute a solvent having affinity to the embedding medium for the dehydrating agent (mainly alcohols) which has been substituted for water contained in the tissue in the preceding process. Herein, the fat-soluble substituting agent described above according to the present invention is applied. The treating method may be the same as the case with a conventional fat-soluble substituting agent such as xylene and chloroform. For example, a tissue is first dipped in a mixed solution, preferably an equivolume mixed solution of the substituting agent of the present invention and the dehydrating agent used in the preceding process, and then it is dipped in a bath consisting only of the substituting agent of the present invention. This second operation is preferably repeated twice or three times.

Since the substituting agent of the present invention is non-toxic and odorless, a work in the process concerned can be carried out sanitarily safely. Further, use of the substituting agent of the present invention can provide a beautiful microscopic image which is dyed more vividly than ever.

The substituting agent of the present invention is as explained above and includes, for example, isopropyl palmitate, isopropyl myristate, isomyristyl isomyristate, diisobutyl sebacate, methyl isooctanoate, isostearyl isostearate, pentaethylene glycol monolaurate, pentaethylene glycol monocetyl ether, glyceryl trioctanoate, propylene glycol dioctanoate, dipropylene glycol monolaurate, diglyceryl tetraoctanoate, dioctyl glyceryl ether, and dioctyl ether etc. Tissue preparations prepared using them are excellent equally to or more than a tissue preparation prepared with a conventional fat-soluble substituting agent, generally judging viewpoints of easiness in slicing with a microtome, the form-maintaining state in the inside of tissue and the dye-affinity etc.

### 〈Embedding process〉

The process concerned has an object to allow an embedding medium to penetrate into the inside of tissue to solidify/harden it in order to facilitate slicing of a tissue preparation. Most generally, paraffins are used.

In the embedding process, for example, paraffins are heated to not much more than 60°C for softening and melting, and a tissue is dipped in a mixed solution, preferably an equivolume mixed solution prepared by adding the substituting agent used in the step described above to this. Then, passing through a stage at which the tissue is dipped in a pure solution of paraffins similarly melted at not much more than 60°C, to allow paraffins to penetrate into the tissue.

In the case where paraffin embedding is carried out, a process for substituting with waxes in the similar manner is preferably provided intermediately of transferring from the substituting agent to paraffins. Herein, waxes mean solid ester consisting of higher fatty acid and higher primary alcohol and includes, for example, spermaceti wax, beeswax and Chinese insect wax. Particularly preferred is beeswax.

In the next process, a tissue piece is transferred to a small vessel for embedding together with the above paraffin liquid softened and melted, and then, temperature is lowered from 60°C to a room temperature to solidify paraffin, whereby a paraffin block prepared by embedding the tissue in paraffin is obtained.

Provided that the embedding medium used in the embedding process in the process for preparing the tissue preparation of the present invention is not limited to paraffins, and it can be applied as well to resin embedding to which attention is paid recently. Provided that a resin monomer to be impregnated is required to be fat-soluble.

### 〈Slicing, staining (dyeing) and microscopic observation〉

The block in which the tissue prepared in the above process is embedded is sliced to a piece having a thickness approximately of 2 to 4 micron with a microtome, and it is placed on a slide glass followed by removal of an embedding medium. For example, in case of paraffin embedding, cut pieces are extended with a paraffin extender for de-paraffining which proceeds in the reverse order to the paraffin-embedding process ultimately to alcohol. Also in the resin embedding, the embedding medium is preferably removed in a suitable solvent but it is not necessarily needed to remove it. Thereafter, it is dyed by a staining (dyeing) method according to an object, and then a cover glass is placed thereon using a sealing agent to seal it for observing it under a microscope.

The tissue preparation prepared by the operation described above is excellent equally to or more than the case in which a conventional fat-soluble substituting agent such as xylene is used in terms of easiness in slicing with a microtome, the form-maintaining state in the inside of tissue and the dye-affinity.

### EXAMPLES

Next, concrete examples of the present invention will be shown but the embodiments of the present invention are exemplified thereby and the present invention will not be limited to these examples.

### Example 1

A tissue preparation was produced by the following steps.
1) Sampling (cutting gross specimen) of tissue.
2) Fixing with formalin.

### 〈Dehydration-substituting process (3 to 7)〉

3) Dipping in a 70 % isopropyl alcohol bath for 30 minutes.
4) Dipping in a 90 % isopropyl alcohol bath for 30 minutes.
5) Dipping in a 90 % isopropyl alcohol bath for 30 minutes.
6) Dipping in a 100 % isopropyl alcohol bath for 60 minutes.
7) Dipping in a 100 % isopropyl alcohol bath for 60 minutes.

### 〈Process for substituting (clearing) a fat-soluble substituting agent for a dehydrating agent (8 to 10)〉

8) Dipping in a bath of a 1 : 1 (volume ratio) mixed solution of 100 % isopropyl alcohol and isopropyl palmitate for one hour.
9) Dipping in a bath of a mixed solution (Examples 1 and 2 of the present invention) consisting of isopropyl alcohol of 15 volume % based on isopropyl palmitate or a xylene bath (Comparative Examples 1 and 2) for 120 minutes.
10) Dipping in a bath of a mixed solution (Examples 1 and 2 of the present invention) of isopropyl palmitate and isopropyl alcohol having the same composition as that in the foregoing process or a xylene bath. (Comparative Examples 1 and 2) for 120 minutes.

### 〈Embedding process (11 to 15)〉

11) Dipping in a bath of an equivolume mixed solution of isopropyl palmitate and melted beeswax at 60°C for 60 minutes.
12) Dipping in a bath of melted beeswax at 60°C for 60 minutes.
13) Dipping in a bath of melted paraffin at 60°C for 60 minutes.
14) Dipping in a bath of melted paraffin at 60°C for 120 minutes.
15) Cooling down to a room temperature and solidifying/hardening paraffin to embed the tissue.
16) Slicing.
17) Dyeing : hematoxylin-eosin staining
18) Microscopic observation (× 600).

The microscopic photographs prepared by the method described above are shown in Fig. 1 (a)(Example 1), (b) (Comp. Ex.1) and Fig. 2 (a)(Ex. 2), (b)(Comp. Ex.2). In particular, comparing (a) with (b) in Fig. 1 and (a) with (b) in Fig. 2 it is shown in Figs. 1 and 2 that inventive (a) is more clearly dyed by dyeing, and tissues and boundary regions in a cell structure are clearly shown as well (Dyeing was carried out for the same period of time in (a) and (b). Accordingly, it has been confirmed with the method using the fat-soluble substituting agent according to the present invention that not only working environment is improved and handling performance is enhanced but also the beautiful tissue preparations (samples) are obtained.

### Example 2

Tissues of the same organ which were subjected to fixing treatment in formalin and dehydrated according to the steps of 3) to 7) in Example 1 wherein using isopropyl alcohol in the care of isopropyl myristate (Example 3), using ethanol in the case of xylen (Comparative Example 3). Further, the tissues in which water was substituted with ethanol were transferred in a prescribed vessel which contained isoprpyl myristate (Example 3 of the present invention) or xylene (Comparative Example 3) and were left for dipping for one hour, respectively. This procedure was repeated three times and then, a procedure to substitute similarly with paraffin was carried out. Further, a paraffin block thus prepared was sliced and dyed, and microscopic observation was carried out.

Easiness in slicing the tissue preparation with a microtome, the form-maintaining state in the inside of tissue, and a dye-affinity etc. were totally judged to evaluate the substituting agents. In judgment, the evaluation of xylene (Comparative Example 3) which is a substituting agent used at present was designated as "average", and "good" and "bad" were judged in comparison therewith.

The tissue preparation (sample) obtained by the process in Example 3 was so excellent as compared with that in Comparative Example 3 that it was totally judged as "good".

Those using the substituting agents of the present invention could get higher evaluation than the comparative examples which are presently in use. This shows that the tissue has excellent affinity with paraffin sufficiently enough to slice, that is, substitution (clearing) of the fat-soluble substituting agent of the present invention for alcohol, followed by substitution with paraffin, was sufficiently carried out. Further, the substituting agent of the present invention did not damage the form and structure of the tissue and did not prevent dyeing.

It should be understand that the present invention is not limited to the specific embodiments herein above disclosed and modifications may be done without departing the gist and scope of the present invention as disclosed herein and claimed in the appendant claims.

## Claims

1. A fat-soluble substituting agent for substituting a dehydrating agent for producing a tissue preparation, comprising at least one selected from the group consisting of esters of fatty acid and alcohol and having a total carbon number of 6 to 50, preferably 6 to 30 and ethers of the same kind or a different kind of alcohols and having a total carbon number of 6 to 50, preferably 6 to 30.

2. The fat-soluble substituting agent as defined in claim 1, characterized by containing esters of fatty acid and alcohol, said esters having a total carbon number of 10 to 30, preferably 10 to 24.

3. The fat-soluble substituting agent as defined in claim 2, characterized by consisting essentially of at least one of isopropyl palmitate and isopropyl myristate.

4. The fat-soluble substituting agent as defined in any one of claims 1 to 3, characterized in that isopropyl alcohol is further contained in 1 to 20 volume % based on said esters and/or said ethers.

5. The fat-soluble substituting agent as defined in any one of claims 1 to 4, characterized in that said esters of fatty acid and alcohol are selected from esters of fatty acid ester and monohydric alcohol and di- or more valent polyhydric alcohols.

6. The fat-soluble substituting agent as defined claim 5, characterized in that said esters of fatty acid and monohydric alcohol are selected from the group consisting of isopropyl myristate, isopropyl palmitate, ethyl palmitate, methyl stearate, butyl stearate, cetyl isooctanoate, diisobutyl sebacate, isostearil isostearate and isomyristil isomyristate.

7. The fat-soluble substituting agent as defined claim 5, characterized in that said esters of fatty acid and di- or more valent polyhydric alcohols are selected from the group consisting of propylene glycol dioctanoate, propylene glycol monooctanoate, glyceryl trioctanoate, glyceryl monolaurate, dioctyl dipropylene glycol ester, diethylene glycol monooctanoate, pentaethylene glycol monolaurate, tetrahexyl pentaerithritol ester and diglyceryl tetraoctanoate.

8. The fat-soluble substituting agent as defined in any one of claims 1 to 4, characterized in that said ethers of alcohols are selected from the group consisting of ethers of monohydric alcohols themselves, and ethers of monohydric alcohol and polyhydric alcohol.

9. The fat-soluble substituting agent as defined in claim 8, characterized in that said ethers of alcohols are selected from the group of ethers of monohydric alcohols consisting of dihexyl ether, dioctyl ether, dilauryl ether and distearyl ether.

10. The fat-soluble substituting agent as defined in claim 8, characterized in that said ethers of alcohols are selected from the group of ethers of monohydric alcohol and polyhydric alcohol consisting of propylene glycol monolauryl ether, diethylene glycol monolauryl ether, dipropylene glycol monolauryl ether, diethylene glycol dioctyl ether, trioctyl glyceryl ether and distearil glyceryl ether.

11. A process for preparing a tissue preparation, comprising :
step (a) in which a tissue piece is subjected to a fixing treatment,
step (b) in which water contained in the tissue piece is subjected to a dehydration-substituting treatment with a dehydrating agent,
step (c) in which the dehydrating agent present in the tissue piece originating in the preceding step is substituted with a fat-soluble substituting agent,
step (d) in which the tissue piece is embedded with an embedding medium, and further
step (e) in which the resulting embedded product is sliced and dyed,
wherein the fat-soluble substituting agent as defined in any one of claims 1 to 10 is used in the step (c) in which said dehydrating agent is substituted with the fat-soluble substituting agent.

12. The process for preparing a tissue preparation as defined in claim 11, characterized in that isopropyl alcohol is used for the dehydrating agent in the dehydrating process.

13. The process for preparing a tissue preparation as defined in claim 11 or 12, characterized in that the step (d) in which the tissue piece is embedded includes a step in which the fat-soluble substituting agent is substituted with waxes and a step in which waxes are substituted with paraffins.
